(19) Europäisches Patentamt
European Patent Office
Office européen des brevets

(11) **EP 4 456 441 A1**

(12) **EUROPEAN PATENT APPLICATION**
published in accordance with Art. 153(4) EPC

(43) Date of publication:
**30.10.2024 Bulletin 2024/44**

(21) Application number: **22911850.0**

(22) Date of filing: **20.12.2022**

(51) International Patent Classification (IPC):
*H04B 7/06* (2006.01)    *H04B 7/08* (2006.01)
*H04B 7/0408* (2017.01)    *H04B 17/373* (2015.01)
*H04L 5/00* (2006.01)

(52) Cooperative Patent Classification (CPC):
**H04B 7/0408; H04B 7/06; H04B 7/08;
H04B 17/373; H04L 5/00**

(86) International application number:
**PCT/KR2022/020828**

(87) International publication number:
**WO 2023/121217 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2021 KR 20210185757**

(71) Applicant: **LG Electronics Inc.
Yeongdeungpo-gu
Seoul 07336 (KR)**

(72) Inventors:
• **GO, Seongwon
  Seoul 06772 (KR)**
• **KANG, Jiwon
  Seoul 06772 (KR)**
• **CHUNG, Jaehoon
  Seoul 06772 (KR)**
• **KIM, Kyuseok
  Seoul 06772 (KR)**

(74) Representative: **Plasseraud IP
104 Rue de Richelieu
CS92104
75080 Paris Cedex 02 (FR)**

(54) **METHOD AND APPARATUS FOR TRANSMITTING AND RECEIVING WIRELESS SIGNAL IN WIRELESS COMMUNICATION SYSTEM**

(57)    Disclosed are a method and apparatus for transmitting and receiving a wireless signal in a wireless communication system. The method according to an embodiment of the present disclosure may comprise the steps of: receiving, from a base station, first configuration information including a list of TCI states, the list of TCI states providing a reference signal for a QCL for a downlink channel and/or a reference for determining an uplink transmission spatial filter for an uplink channel; receiving, from the base station, second configuration information related to a CORESET, a plurality of CORESETs, which have different CORESET full indexes, being configured by the second configuration information; and receiving DCI from the base station.

FIG.9

```
┌────────────────────────────────────────┐
│  Receive first configuration information │─── S901
│       including a list of TCI states     │
└────────────────────────────────────────┘
                    │
┌ ─ ─ ─ ─ ─ ─ ─ ─ ─ ─ ─ ─ ─ ─ ─ ─ ─ ─ ─ ┐
   Receive second configuration information  ─── S902
│         related to a CORESET            │
└ ─ ─ ─ ─ ─ ─ ─ ─ ─ ─ ─ ─ ─ ─ ─ ─ ─ ─ ─ ┘
                    │
┌────────────────────────────────────────┐
│    Receive downlink control information  │─── S903
└────────────────────────────────────────┘
                    │
┌────────────────────────────────────────┐
│   Perform uplink transmission or receive │─── S904
│           downlink transmission          │
└────────────────────────────────────────┘
```

EP 4 456 441 A1

**Description**

[Technical Field]

The present disclosure relates to a wireless communication system, and in more detail, relates to a method and an apparatus of transmitting and receiving a wireless uplink or downlink channel/signal in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving an uplink or downlink channel/signal.

In addition, an additional technical object of the present disclosure is to provide a method and an apparatus for indicating/updating a common or individual beam (i.e., reference signal for QCL relationship for downlink transmission, reference for determination of uplink transmission spatial filter for uplink transmission) for downlink/uplink transmission in a wireless communication system supporting multiple transmission/reception points (TRPs).

The technical objects to be achieved by the present disclosure are not limited to the above-described technical objects, and other technical objects which are not described herein will be clearly understood by those skilled in the pertinent art from the following description.

[Technical Solution]

A method of performed by a terminal in a wireless communication system according to an aspect of the present disclosure may include: receiving, from a base station, first configuration information including a list of transmission configuration indication (TCI) states, wherein the list of TCI states provides a reference for determining a reference signal for quasi co-location (QCL) for a downlink channel and/or an uplink transmission spatial filter for an uplink channel; receiving, from the base station, second configuration information related to a control resource set (CORESET), wherein a plurality of CORESETs having different CORESET pool indexes are configured by the second configuration information; and receiving, from the base station, downlink control information (DCI). Based on one TCI state in the list of TCI states being indicated by the DCI, the indicated one TCI state may be applied to uplink transmission and downlink transmission related to a CORESET pool index of a CORESET in which the DCI is transmitted.

A method performed by a base station in a wireless communication system according to an additional aspect of the present disclosure may include: transmitting, to a terminal, first configuration information including a list of transmission configuration indication (TCI) states, wherein the list of TCI states provides a reference for determining a reference signal for quasi co-location (QCL) for a downlink channel and/or an uplink transmission spatial filter for an uplink channel; transmitting, to the terminal, second configuration information related to a control resource set (CORESET), wherein a plurality of CORESETs having different CORESET pool indexes are configured by the second configuration information; and transmitting, to the terminal, downlink control information (DCI). Based on one TCI state in the list of TCI states being indicated by the DCI, the indicated one TCI state may be applied to uplink transmission and downlink transmission related to a CORESET pool index of a CORESET in which the DCI is transmitted.

[Technical Effects]

According to an embodiment of the present disclosure, ambiguity regarding an indication/update of a common or individual beam (i.e., reference signal for QCL relationship for downlink transmission, reference for determination of uplink transmission spatial filter for uplink transmission) can be prevented even in a wireless communication system supporting multiple transmission/reception points (TRPs).

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a method of multiple TRPs transmission in a wireless communication system to which the present disclosure may be applied.

FIG. 8 illustrates a signaling procedure between a network and a terminal for a wireless signal transmission and reception method according to an embodiment of the present disclosure.

FIG. 9 is a diagram illustrating an operation of a terminal for a method of transmitting and receiving a wireless signal according to an embodiment of the present disclosure.

FIG. 10 is a diagram illustrating an operation of a base station for a method of transmitting and receiving a wireless signal according to an embodiment of the present disclosure.

FIG. 11 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal

- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

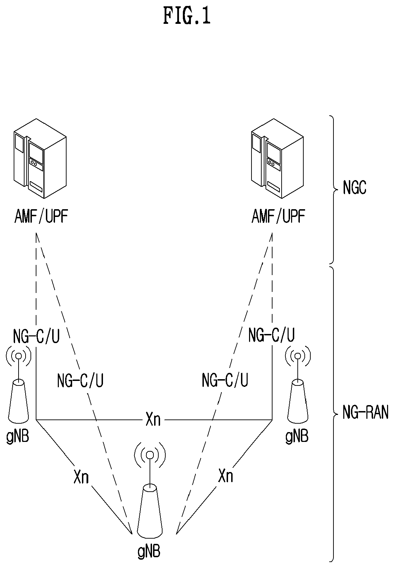

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

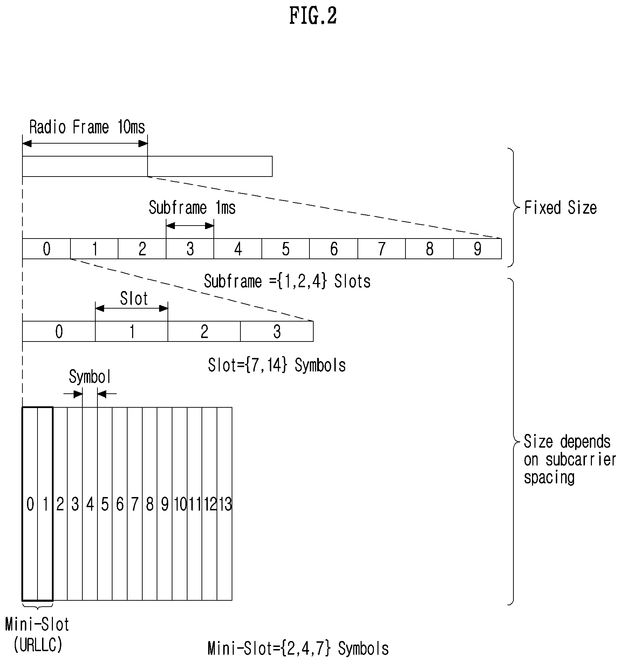

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW) .

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is 480·103 Hz and $N_f$ is 4096. Downlink and uplink transmission is configured (organized) with a radio frame having a duration of $T_f=1/(\Delta f_{max}N_f/100)\cdot T_c$=10ms. Here, a radio frame is configured with 10 subframes having a duration of $T_{sf}=(\Delta f_{max}N_f/1000)\cdot T_c$=1ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu} \in\{0,...,N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,u}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL (quasi co-located or quasi co-location) relationship. In this case, the large-scale property includes at least one of delay spread, doppler spread, frequency shift, average received power, received timing.

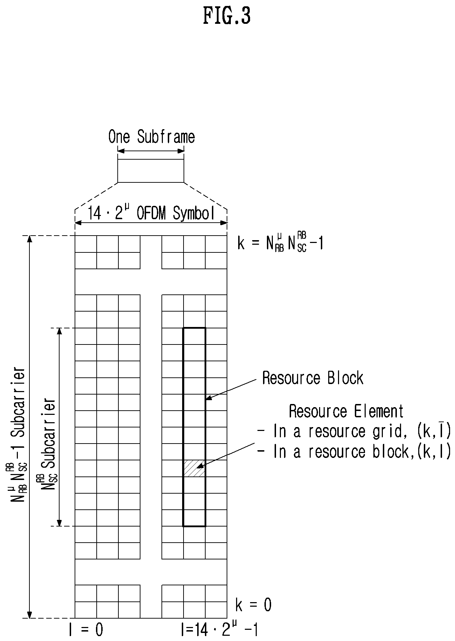

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, k=0, ... , $N_{RB}^{\mu}N_{sc}^{RB}$-1 is an index in a frequency domain and l'=0,..., $2^{\mu}N_{symb}^{(\mu)}$-1 refers to a position of a symbol in a subframe. When referring to a resource element in a slot, an index pair (k,l) is used. Here, l=0,..., $N_{symb}^{\mu}$-1. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

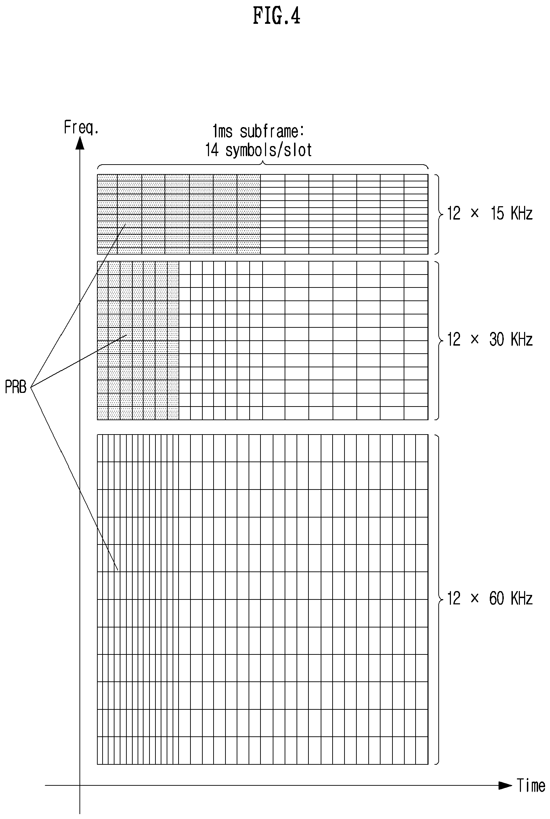

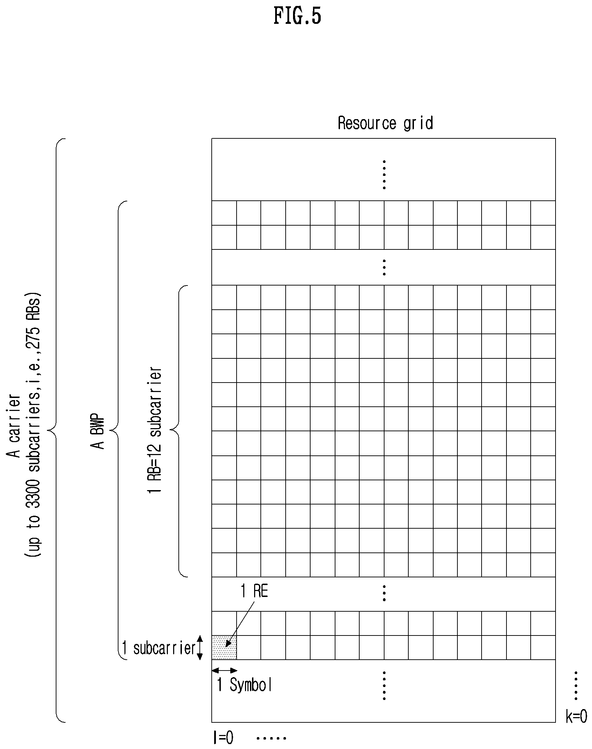

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

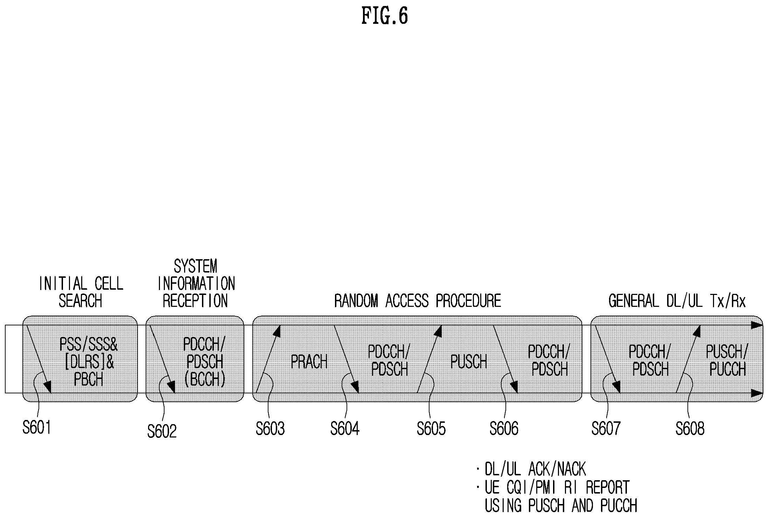

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606) . A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas

(e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

In addition, an MTRP-URLLC may mean that the same TB (Transport Block) is transmitted using different layers/time/frequencies of M-TRPs. A UE configured with an MTRP-URLLC transmission method may be indicated with multiple TCI state(s) by DCI, and it may be assumed that data received using a QCL RS of each TCI state is the same TB. On the other hand, an MTRP-eMBB may mean that different TBs are transmitted using different layers/time/frequencies by M-TRPs. A UE configured with an MTRP-eMBB transmission method is indicated by several TCI state(s) by DCI, and it may be assumed that data received using a QCL RS of each TCI state are different TBs. In this regard, as a UE separates and uses an RNTI configured for an MTRP-URLLC purpose and an RNTI configured for an MTRP-eMBB purpose, it may be decided/determined whether corresponding M-TRP transmission is URLLC transmission or eMBB transmission. That is, when CRC masking of DCI received by a UE is performed using an RNTI configured for an MTRP-URLLC purpose, this may correspond to URLLC transmission, and CRC masking of DCI is performed using an RNTI configured for an MTRP-eMBB purpose, this may correspond to eMBB transmission.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter ControlResourceSet information element (IE) is used to configure a time/frequency control resource set (CORESET). For example, the control resource set (CORESET) may be related to detection and reception of downlink control information. The ControlResourceSet IE may include a CORESET-related ID (e.g., controlResourceSetID) / an index of a CORESET pool for a CORESET (e.g., CORESETPoolIndex) / a time/frequency resource configuration of a CORESET / TCI information related to a CORESET, etc. As an example, an index of a CORESET pool (e.g., CORESETPoolIndex) may be set to 0 or 1. In the above description, a CORESET group may correspond to a CORESET pool, and a CORESET group ID may correspond to a CORESET pool index (e.g., CORESETPoolIndex) .

NCJT(Non-coherent joint transmission) is a scheme in which a plurality of transmission points (TP) transmit data to one terminal by using the same time frequency resource, TPs transmit data by using a different DMRS(Demodulation Multiplexing Reference Signal) between TPs through a different layer (i.e., through a different DMRS port).

A TP delivers data scheduling information through DCI to a terminal receiving NCJT. Here, a scheme in which each TP participating in NCJT delivers scheduling information on data transmitted by itself through DCI is referred to as 'multi DCI based NCJT'. As each of N TPs participating in NCJT transmission transmits DL grant DCI and a PDSCH to UE, UE receives N DCI and N PDSCHs from N TPs. Meanwhile, a scheme in which one representative TP delivers scheduling information on data transmitted by itself and data transmitted by a different TP (i.e., a TP participating in NCJT) through one DCI is referred to as 'single DCI based NCJT'. Here, N TPs transmit one PDSCH, but each TP transmits only some layers of multiple layers included in one PDSCH. For example, when 4-layer data is transmitted, TP 1 may transmit 2 layers and TP 2 may transmit 2 remaining layers to UE.

Hereinafter, partially overlapped NCJT will be described.

In addition, NCJT may be classified into fully overlapped NCJT that time frequency resources transmitted by each TP are fully overlapped and partially overlapped NCJT that only some time frequency resources are overlapped. In other words, for partially overlapped NCJT, data of both of TP 1 and TP 2 are transmitted in some time frequency resources and data of only one TP of TP 1 or TP 2 is transmitted in remaining time frequency resources.

Hereinafter, a method for improving reliability in Multi-TRP will be described.

As a transmission and reception method for improving reliability using transmission in a plurality of TRPs, the following two methods may be considered.

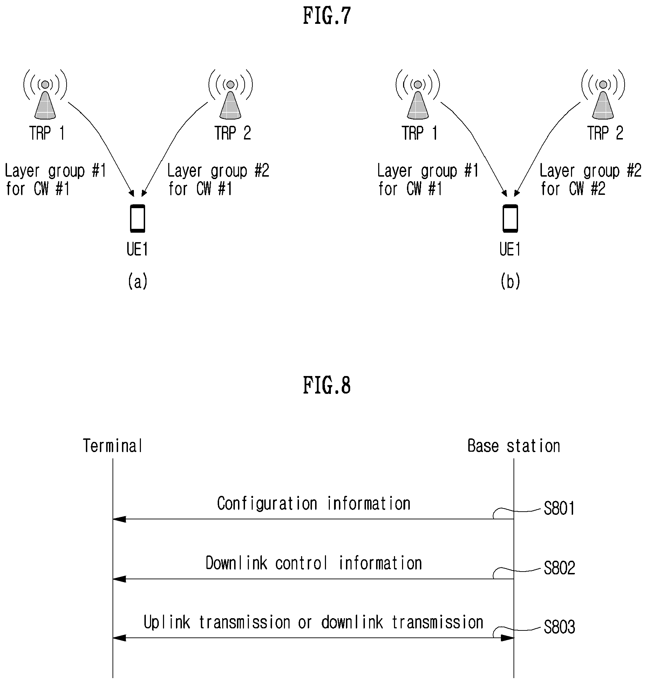

FIG. 7 illustrates a method of multiple TRPs transmission in a wireless communication system to which the present disclosure may be applied.

In reference to FIG. 7 (a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7 (a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Beam management method

The reception/transmission beam configuration/update/indication of a terminal between a base station and a terminal of Rel-15/16 will be described.

First, the method for configuring/indicating a terminal's reception beam and configuring/indicating a terminal's transmission beam by a base station will be described.

As described above, a TCI state is used by a base station to configure/indicate a reception beam (i.e. spatial Rx parameter) to be used when a terminal receives a PDCCH and a PDSCH (i.e. when receiving a DMRS of a PDCCH and a PDSCH) by utilizing the QCL (Quasi Co-Located) concept introduced in Rel-15 NR. A DL reference signal (e.g., SS/PBCH block resource indicator (SSB-RI), CRI (periodic (P) / semi-persistent (SP) / aperiodic (AP))) can be configured/updated as a reference RS or a source RS of a QCL Type-D component through a corresponding TCI state. Through this, a terminal may be indicated to use a reception beam for reception of a DL RS configure as above as a reference when receiving a PDCCH or a PDSCH.

Additionally, in Rel-15 NR, spatial relationship information (spatialRelationInfo) can be used by a base station to configure/indicate a transmission beam to be used when a terminal transmits a UL channel (e.g., PUSCH or PUCCH or SRS). A base station may configure/update a DL reference signal (i.e., SSB-RI, CRI(P/SP/AP)) or an SRS (i.e., SRS resource) as a reference RS for a target UL channel and/or a target RS through RRC configuration and/or MAC control element (CE) activation. Through this, a UL transmission beam (i.e., spatial Tx parameter) used when a terminal transmits a PUCCH and an SRS can be configured/indicated. Additionally, when a base station schedules a PUSCH to a terminal, a transmission beam configured/updated/indicated by a base station and used for SRS transmission (for codebook (CB) or non-codebook (NCB) purposes) is indicated as a transmission beam for a PUSCH through an SRS resource indicator (SRI) field of UL grant DCI and can be used as a PUSCH transmission beam of the terminal accordingly.

Next, a method for updating a reception beam of a terminal and updating a transmission beam of a terminal by a base station will be described.

In Rel-15 NR, a TCI state configuration is used to configure/indicate a reception beam for a target DL RS/channel. If a target DL RS/channel is a CSI-RS, a terminal reception beam can be configured by setting a QCL type-D RS at an RRC/MAC CE level (signaling) (via configuring a TCI state ID (identifier) within a TCI state pool). In addition, if a target DL RS/channel is a PDCCH, a terminal reception beam can be configuring by setting up to 64 TCI state IDs in a specific CORESET and then indicating a specific TCI state ID through a MAC CE. A reception beam of a corresponding CORESET can be updated through the same MAC CE message. Additionally, for a PDSCH reception beam, by connecting/associating up to 8 TCI state IDs (within a pool of a maximum of 128 TCI states) to a TCI state field of DL DCI through a MAC CE, a PDSCH reception beam can be indicated through a TCI indication during DL scheduling, a PDSCH reception beam can be updated by updating a TCI state ID connected/associated to the TCI state field through the same MAC CE message.

In Rel-16 NR, to reduce an overhead of DL reception beam configuration/indication, an operation between a base station and a terminal has been improved to enable simultaneous/single TCI state ID activation on multiple component carriers (CCs) (or BWP) for a PDCCH and a PDSCH through a MAC CE message.

In Rel-15 NR, a transmission beam can be configured by connecting/associating PUCCH-SpatialRelationInfoId through a MAC CE message for each PUCCH resource to configure/indicate a transmission beam of a PUCCH. Additionally, a MAC level update for PUCCH-SpatialRelationInfo is possible through the same MAC CE message. In addition, in the case of an SRS, for an SP (semi persistent)-SRS, the SRS-SpatialRelationInfo of SRS resources in the semi-persistent SRS resource set can be updated through a MAC CE message that activates transmission of an SRS.

In Rel-16 NR, to reduce latency of a UL transmission beam configuration/indication, for an AP (aperiodic)-SRS, an operation between a base station and a terminal has been improved to enable updating of SRS-SpatialRelationInfo for SRS resources in a corresponding aperiodic SRS resource set through a MAC CE message. In addition, like a DL reception beam, an operation between a base station and a terminal has been improved to enable simultaneous updating of a spatial relation reference RS (RS) in multiple CC (BWP) for an SP-SRS and an AP-SRS through a MAC CE message. In addition, by introducing a concept of a PUCCH resource group (per BWP), an operation between a base station and a terminal has been improved to enable simultaneous spatial relationship updating for PUSCH resources in a corresponding PUCCH resource group.

As described above, in NR Rel-15/Rel-16, higher layer signaling such as an RRC and a MAC CE is mainly used for a beam indication/update operation for reception/transmission between a base station and a terminal, and a DCI-based beam indication operation was supported for some channels/RS (e.g., PDSCH, PUSCH), etc.

In Rel-17, a dynamic beam update operation using a joint DL/UL TCI state and a separate DL/UL TCI state will be introduced. Standardization was carried out for a terminal common beam update operation in which a base station uses DCI to perform an indication/update with one common beam for a plurality of specific channel/RS combinations of a terminal. As a target channel/RS of common beam update, in the case of DL, a UE-dedicated CORESET and UE-dedicated reception on a PDSCH can be configured. Additionally, in the case of UL, all or a subset of a dynamic grant (DG), a configured grant (CG)-PUSCH, a dedicated PUCCH can be configured as a target channel/RS of common beam update. Additionally, an AP CSI-RS and an SRS for tracking/beam management (BM) can be configured as a target channel/RS. Hereinafter, the results of the discussion at the standardization meeting described above are described.

[Agreement]

On beam indication signaling medium to support joint or separate DL/UL beam indication in Rel.17 unified TCI framework:

- Support L1-based beam indication using at least UE-specific (unicast) DCI to indicate joint or separate DL/UL beam indication from the active TCI states

  · The existing DCI formats 1_1 and 1_2 are reused for beam indication.
  · Support a mechanism for UE to acknowledge successful decoding of beam indication.

The ACK/NAK of the PDSCH scheduled by the DCI carrying the beam indication can be used as an ACK also for the DCI.

  - Support activation of one or more TCI states via MAC CE analogous to Rel.15/16:

  · At least for the single activated TCI state, the activated TCI state is applied.
  · The content for the MAC CE is determined based on the outcome of issue 1.

Note: There is no implications on the support of single TRP or multi-TRP.

[Agreement]

On Rel-17 unified TCI framework, to accommodate the case of separate beam indication for UL and DL:

- Utilize two separate TCI states, one for DL and one for UL.

Note: For FR1, UE does not expect UL TCI to provide a reference for determining common UL TX spatial filter(s), if UL TCI is supported for FR1.

- For the separate DL TCI:

    · The source reference signal(s) in M TCIs provide QCL information at least for UE-dedicated reception on PDSCH and for UE-dedicated reception on all or subset of CORESETs in a CC.

- For the separate UL TCI:

    · The source reference signal(s) in N TCIs provide a reference for determining common UL TX spatial filter(s) at least for dynamic-grant/configured-grant based PUSCH, all or subset of dedicated PUCCH resources in a CC.
    · Optionally, this UL TX spatial filter can also apply to all SRS resources in resource set(s) configured for antenna switching/codebook-based/non-codebook-based UL transmissions.

Note: This does not preclude the type of UE supporting only 1 beam tracking loop.

[Agreement]

On Rel.17 unified TCI framework, based on the agreements in RAN1#102-e and 103-e, the following terms are defined as follows.

- For M=1:

    · DL TCI: The source reference signal(s) (analogous to Rel.15, two, if qcl_Type2 is configured in addition to qcl_Type1) in the DL TCI provides QCL information at least for UE-dedicated reception on PDSCH and all of CORESETs in a CC.

- For N=1:

    · UL TCI: The source reference signal in the UL TCI provides a reference for determining UL TX spatial filter at least for dynamic-grant/configured-grant based PUSCH and all of dedicated PUCCH resources in a CC.

- For M=N=1:

    · Joint DL/UL TCI: A TCI refers to at least a common source reference RS used for determining both the DL QCL information and the UL TX spatial filter.
    · Separate DL/UL TCI: The DL TCI and UL TCI are distinct (therefore, separate).

- For M>1:

    · DL TCI: Each of the M source reference signals (or 2M, if qcl_Type2 is configured in addition to qcl_Type1) in the M DL TCIs provides QCL information at least for one of the M beam pair links for UE-dedicated receptions on PDSCH and/or subset of CORESETs in a CC.

- For N>1:

    · UL TCI: Each of the N source reference signals in the N UL TCIs provide a reference for determining UL TX spatial filter at least for one of the N beam pair links associated with dynamic-grant(s)/configured-grant(s) based PUSCH, and/or subset of dedicated PUCCH resources in a CC.

- For M>1 and/or N>1:

    · Joint DL/UL TCI: A TCI refers to at least a common source reference RS used for determining both the DL QCL information and the UL TX spatial filter. In this case, M=N.
    · Separate DL/UL TCI: The M DL TCIs and N UL TCIs are distinct (therefore, separate).

Note: Other TCI types/terms such as "common TCI" are not used.

[Agreement]

On Rel.17 unified TCI framework, the supported source/target QCL relations in the current TS38.214 V16.4.0 is supported for QCL Type D.

Note: This implies that the following source RS types for DL QCL (Type D, for DL RX spatial filter reference) information for DL UE-dedicated reception on PDSCH and all/subset of CORESETs are supported.

· CSI-RS for beam management
· CSI-RS for tracking

[Agreement]

On Rel.17 unified TCI framework, the following source RS types for UL TX spatial filter are supported.

· CSI-RS for tracking
· Note: SRS for BM, SSB, and CSI-RS for BM have been agreed in RAN1#102-e.

[Agreement]

On Rel.17 unified TCI framework:

· For joint and separate DL/UL TCI, DL large scale QCL properties are inferred from one (qcl-Type1) or two RSs (qcl-Type1 and qcl-Type2) analogous to Rel.15/16.
· For joint DL/UL TCI, UL spatial filter is derived from the RS of DL QCL Type D.

[Agreement]

For beam indication with Rel-17 unified TCI, support DCI format without DL assignment:

- Use ACK/NACK mechanism analogous to that for SPS PDSCH release with both type-1 and type-2 HARQ-ACK codebook:

· Upon a successful reception of the beam indication DCI, the UE reports an ACK.

Here, upon a failed reception of the beam indication DCI, a NACK can be reported.

In addition, for type-1 HARQ-ACK codebook, a location for the ACK information in the HARQ-ACK codebook is determined based on a virtual PDSCH indicated by the TDRA (time domain resource allocation) field in the beam indication DCI, based on the time domain allocation list configured for PDSCH.

For type-2 HARQ-ACK codebook, a location for the ACK information in the HARQ-ACK codebook is determined according to the same rule for SPS release.

· The ACK is reported in a PUCCH k slots after the end of the PDCCH reception where k is indicated by the PDSCH-to-HARQ_feedback timing indicator field in the DCI format, or provided dl-DataToUL-ACK or dl-DataToUL-ACK-ForDCI-Format1-2-r16 if the PDSCH-to-HARQ_feedback timing indicator field is not present in the DCI.

- When used for beam indication:

· CS-RNTI is used to scramble the CRC for the DCI.
· The values of the following DCI fields are set as follows:
Set to RV = all '1' s, MCS = all '1's, NDI = 0, all '0's for FDRA Type 0, all '1's for FDRA Type 1, all '0's for dynamicSwitch (same as in Table 10.2-4 of TS38.213)

- Use the existing TCI field (always present) to signal the following: 1) Joint DL/UL TCI state, 2) DL-only TCI state (for separate DL/UL TCI), 3) UL-only TCI state (for separate DL/UL TCI)
- In addition, use the following DCI fields as the fields are being used in Rel-16:

Identifier for DCI formats, Carrier indicator, Bandwidth part indicator, TDRA, Downlink assignment index (if configured), TPC (transit power control) command for scheduled PUCCH, PUCCH resource indicator, PDSCH-to-HARQ_feedback timing indicator (if present)

- The remaining unused DCI fields and codepoints are reserved in R17.
- Support UE to report whether or not to support TCI update by DCI format 1_1/1_2.

    · For a UE supporting TCI update by DCI format 1_1/1_2, it must support TCI update by using DCI 1_1/1_2 with DL assignment, and support of the above feature for TCI update by DCI format 1_1/1_2 without DL assignment is UE optional.

[Agreement]

For M=N=1, on Rel-17 unified TCI, for separate DL/UL TCI, one instance of beam indication using DCI formats 1_1/1_2 (with and without DL assignment) can be used as follows:

· One TCI field codepoint represents a pair of DL TCI state and UL TCI state. If the DCI indicates such a TCI field codepoint, the UE applies the corresponding DL TCI state and UL TCI state.
· One TCI field codepoint represents only a DL TCI state. If the DCI indicates such a TCI field codepoint, the UE applies the corresponding DL TCI state, and keeps the current UL TCI state.
· One TCI field codepoint represents only an UL TCI state. If the DCI indicates such a TCI field codepoint, the UE applies the corresponding UL TCI state, and keeps the current DL TCI state.

[Agreement]

On Rel.17 unified TCI framework,

- Any DL RS that is a valid target DL RS of a Rel-15/16 TCI state based on the Rel-15/16 QCL rules can be configured as a target DL RS of Rel-17 DL TCI (hence the Rel-17 DL TCI state pool).

Note: This does not imply that all such DL RSs necessarily share a same TCI state.

· The DL RS includes CSI-RS and DMRS for PDSCH or PDCCH.

- Note: This does not imply that DL and UL TCI state pools are separate or shared for separate DL/UL TCI (this issue is still TBD).

[Agreement]

On Rel-17 unified TCI framework, for a UE configured with both joint TCI and separate DL/UL TCI, configuration of joint TCI or separate DL/UL TCI is based on RRC signaling.

[Agreement]

On Rel-17 beam indication enhancements for L1/L2-centric inter-cell beam management mobility, support the following:
Rel-17 MAC-CE-based and/or DCI-based beam indication (at least using DCI formats 1_1/1_2 with and without DL assignment including the associated MAC-CE-based TCI state activation)

[Agreement]

On Rel.17 unified TCI framework, the following DL RSs can share the same indicated Rel-17 TCI state as UE-dedicated reception on PDSCH and for UE-dedicated reception on all or subset of CORESETs in a CC.

· Aperiodic CSI-RS resources for CSI
· Aperiodic CSI-RS resources for BM

[Agreement]

On Rel.17 unified TCI framework:

· Aperiodic SRS resources or resource sets for BM can share the same indicated Rel-17 TCI state as dynamic-grant/configured-grant based PUSCH, all or subset of dedicated PUCCH resources in a CC.

Note: This doesn't imply that all time-domain behaviors are automatically supported.

[Agreement]

On Rel.17 unified TCI framework, for intra-cell beam indication, the following DL RSs can share the same indicated Rel-17 TCI state as UE-dedicated reception on PDSCH and for UE-dedicated reception on all or subset of CORESETs in a CC:

- DMRS(s) associated with non-UE-dedicated reception on CORESET(s) and the associated PDSCH
- The channels and signals as for intra-cell beam management except for non-UE dedicated channels/signals
- For the aforementioned applicable channels and signals, SSB associated with a physical cell ID different from that of the serving cell is used as an indirect QCL reference for DL TCI (in case of separate DL/UL TCI) or joint TCI, or an indirect/direct QCL reference for UL TCI (in case of separate DL/UL TCI)

  · Note: When RS X is an indirect QCL reference of a target channel, there exists at least one other source signal on the QCL chain between RS X and the target channel. Here, Rel-15/16 QCL rule is reused by replacing SSB with SSB associated with a physical cell ID different from that of the serving cell.

- For inter-cell beam management, the support of more than one Rel-17 active DL TCI state / QCL per band is a UE capability.

  · If UE does not support such capability, MAC-CE based beam indication (activation of one TCI state) can be used to switch between two different DL receptions along two different beams.
  · Note: The serving cell does not change when beam selection is done.
  · Note: This does not preclude the possibility for TA update on non-serving cell.

[Agreement]

On Rel.17 unified TCI framework, for any DL RS that does not share the same indicated Rel-17 TCI state (s) as UE-dedicated reception on PDSCH and for UE-dedicated reception on all or subset of CORESETs in a CC, but can be configured as a target DL RS of a Rel-17 DL TCI (hence the Rel-17 DL TCI state pool), Rel-17 mechanism(s) which reuse the Rel-15/16 TCI state update signaling/configuration design(s) are used to update/configure such DL RS(s) with Rel-17 TCI state(s).
On Rel-17 unified TCI, for Rel-17, there is no consensus in supporting additional (M,N) values other than (M,N)=(1,1).

[Agreement]

On Rel.17 unified TCI framework, for Rel-17 unified TCI:
· For the number of codepoints in the TCI field for DCI-based beam indication (hence the number of codepoints activated via MAC-CE-based TCI state activation), the largest value is 8.

[Agreement]

On Rel.17 unified TCI framework, for Rel-17 unified TCI:

- For DL channels/signals that do not share the same indicated Rel-17 TCI state as UE-dedicated reception on PDSCH/PDCCH (via Rel-17 MAC-CE/DCI TCI state update), all the QCL rules defined in section 5.1.5 in 38.214 are supported.

  · Note: For CSI-RS used to provide QCL indication for non-UE dedicated channels, the CSI-RS should only be QCLed with SSB of the same PCID as that from the serving cell.

- For DL channels/signals that share the same indicated Rel-17 TCI state as UE-dedicated reception on PDSCH/PDCCH (via Rel-17 MAC-CE/DCI TCI state update), the following options on source RSs and QCL-Types are supported.

· Option 1: TRS is configured for QCL-TypeA source RS and CSI-RS for BM is configured for QCL-TypeD source RS.
· Option 2: TRS is configured for QCL-TypeA and QCL-TypeD source RS.
· Note: For inter-cell beam management, SSB with PCID different from that from the serving cell can be used as a QCL Type-C/D source RS for CSI-RS for BM and/or TRS.

[Agreement]

On Rel.17 unified TCI framework, the source RS in the Rel-17 TCI state that provides QCL-TypeA or QCL-TypeB shall be in the same CC/BWP as the target channel or RS.

[Agreement]

On Rel.17 unified TCI framework, for Rel-17 unified TCI, the largest number of configured TCI states is given as follows (following Rel-15/16 principles):

- When a UE is configured with joint DL/UL TCI: the largest number of configured TCI states for joint DL/UL TCI state update is 128 per BWP per CC.

[Agreement]

On Rel.17 unified TCI framework, for Rel-17 unified TCI, for DL or UL channels/signals that can share the same indicated Rel-17 TCI state as UE-dedicated reception on PDSCH/PDCCH or dynamic-grant/configured-grant based PUSCH, all of dedicated PUCCH resources (via Rel-17 MAC-CE/DCI TCI state update):

· For DL: A non-UE dedicated PDCCH/PDSCH associated with the serving cell PCI or AP CSI-RS for BM or CSI sharing the same indicated Rel-17 TCI state as UE-dedicated reception on PDSCH/PDCCH (via Rel-17 MAC-CE/DCI TCI state update) is configured via RRC.
· For UL: An SRS for BM, for antenna switching, or for codebook/non-codebook based uplink transmission sharing the same indicated Rel-17 TCI state as dynamic-grant/configured-grant based PUSCH, all of dedicated PUCCH resources (via Rel-17 MAC-CE/DCI TCI state update) is configured via RRC.

[Agreement]

On Rel.17 unified TCI framework, for Rel-17 unified TCI, when a UE is configured with separate DL/UL TCI

- The number of configured TCI states a UE can support is a UE capability including the following candidate values per BWP per CC:

    · DL TCI: 64, 128
    · UL TCI: 32, 64

- Note: This doesn't imply that UL TCI shares the same TCI state pool as or uses a different TCI state pool from joint DL/UL TCI.

For Rel-17 unified TCI framework, on applying the indicated Rel-17 TCI state to PDCCH reception and the respective PDSCH reception, for intra-cell and inter-cell BM, support per CORESET determination as follows:

- For any PDCCH reception on a CORESET [other than CORESET#0] that is associated with [at least or only] [USS and/or CSS type 3] set(s) and the respective PDSCH reception, UE always applies the indicated Rel-17 TCI state.

[Agreement]

On Rel.17 unified TCI framework, any SRS resource or resource set that is a valid target signal of a Rel-15/16 spatial relation based on the Rel-15/16 spatial relation rules (on source-target relations) can be configured as a target signal of a Rel-17 UL or, if applicable, joint TCI (hence the Rel-17 UL or, if applicable, joint TCI state pool).

- This feature does not require a new type of source RS on top of the ones supported for UL TCI and joint DL /UL TCI.

- Note: This does not imply that DL and UL TCI state pools are separate or shared for separate DL /UL TCI.
- Note: A Rel-17 UE is not required to support both this feature and optional Rel-16 features of SRS spatial relation info within a same band.

The UE is not expected to be configured with Rel-15/Rel-16 TCI/SpatialRelationInfo if the UE is configured with Rel-17 TCI in any CC in a band.

· The CC list for Rel-16 multi-CC beam indication should not contain any CC configured with Rel-17 TCI.

[Agreement]

For Rel-17 unified TCI framework, on applying the indicated Rel-17 TCI state to PDCCH reception and the respective PDSCH reception:

- For discussion purposes, define as follows:

  · 'CORESET A': A CORESET other than CORESET#0 associated with only UE-dedicated reception on PDCCH in a CC, comprising CORESETs in association with: [USS and/or CSS Type 3]
  · 'CORESET B': A CORESET other than CORESET#0 associated with only non-UE-dedicated reception on PDCCH in a CC, comprising CORESETs in association with: [CSS or CSS other than Type 3]
  • 'CORESET C': A CORESET other than CORESET#0 associated with both UE-dedicated and non-UE-dedicated reception on PDCCH in a CC
  · CORESET#0

- For Rel-17 TCI state indication, support per CORESET determination as follows:

  · For any PDCCH reception on a 'CORESET A' and the respective PDSCH reception, UE always applies the indicated Rel-17 TCI state.
  · For any PDCCH reception on a 'CORESET B' and the respective PDSCH reception, whether or not UE to apply the indicated Rel-17 TCI state associated with the serving cell is determined per CORESET by RRC.

[Agreement]

On Rel.17 unified TCI framework, for common TCI state ID update and activation to provide common QCL information at least for UE-dedicated PDCCH/PDSCH and/or common UL TX spatial filter(s) at least for UE-dedicated PUSCH/PUCCH across a set of configured CCs/BWPs:

- The source RS determined from the indicated common TCI state ID to provide QCL Type-D indication and to determine UL TX spatial filter for a target CC can be configured in the target CC or other CC.
- For intra-band CA, the following configurations can be supported without additional QCL rules:

Agreements on common TCI state ID update and activation for carrier aggregation (CA) cases are described.

· One source RS across CCs can be determined from the indicated common TCI state ID to provide QCL Type-D indication and to determine UL TX spatial filter for the set of configured CCs.
· One source RS per CC can be determined from the indicated common TCI state ID to provide QCL Type-D indication and to determine UL TX spatial filter for the set of configured CCs, and the CC-specific source RSs are further associated with a same QCL-TypeD RS.

- "A set of configured CCs/BWPs" includes all the BWPs in the set of configured CCs.

[Agreement]

For common TCI state ID update and activation to provide common QCL information at least for UE-dedicated PDCCH/PDSCH and/or common UL TX spatial filter(s) at least for UE-dedicated PUSCH/PUCCH across a set of CCs/BWPs:

- RRC-configured TCI state pool(s) can be configured in the PDSCH configuration (PDSCH-Config) for each BWP/CC as in Rel-15/16.

· Note: Such RRC-configured TCI state pool(s) configuration doesn't imply that separate DL/UL TCI state pool is excluded or supported.

- RRC-configured TCI state pool(s) can be absent in the PDSCH configuration (PDSCH-Config) for each BWP/CC, and replaced with a reference to RRC-configured TCI state pool(s) in a reference BWP/CC.

· In the PDSCH configuration (PDSCH-Config) of the reference BWP/CC, RRC-configured TCI state pool(s) shall be configured.
· For a BWP/CC where the PDSCH configuration contains a reference to the RRC-configured TCI state pool(s) in a reference BWP/CC, the UE applies the RRC-configured TCI state pool(s) in the reference BWP/CC.

- When the BWP/CC ID (i.e. bwp-Id or cell) for QCL-Type A/D source RS in a QCL-Info of the TCI state is absent, the UE assumes that QCL-Type A/D source RS is in the BWP/CC to which the TCI state applies.
- Introduce a UE capability to report maximum number of TCI state pools it can support across BWPs and CCs in a band, and the candidate value at least includes 1.

[Agreement]

On Rel-17 unified TCI framework, support common TCI state ID update and activation to provide common QCL information and/or common UL TX spatial filter(s) across a set of configured CCs:

· Just as Rel.16, the source RS in the Rel-17 TCI state that provides QCL-TypeA [or QCL-TypeB] shall be in the same CC as the target channel or RS.

As described above, as a target channel/RS of a common beam update, in the case of DL, a UE-dedicated CORESET and UE-dedicated reception on a PDSCH can be configured.

Meanwhile, in a specific BWP of a UE, up to two CORESET pools may be configured for multiple TRP (M-TRP) transmission/reception. That is, a UE may be provided with two CORESET pool index (e.g., coresetPoolIndex) values 0 and 1 for a first CORESET and a second CORESET, respectively. Alternatively, a UE may not be provided with a CORESET pool index (e.g., coresetPoolIndex) value for a first CORESET(s) and may be provided with 1 as a CORESET pool index value for a second CORESET (s). In this case, a UE can receive DCI from a specific TRP in CORESET(s) belonging to each pool.

If the common beam operation is applied to a (active) BWP with up to two CORESET pools configured as above, a problem may occur where CORESET beams from two TRPs are unified into one (Problem 1). This disclosure proposes a method to solve this problem (Problem 1).

In this disclosure, '/' may be interpreted as 'and', 'or', or 'and/or' depending on the context.

Hereinafter, in this disclosure, a transmission panel/beam to be used when transmitting a PUCCH/PUSCH can be interpreted/applied as a transmission beam to be used when transmitting a DMRS of a PUCCH/PUSCH. In addition, in the present disclosure, applying a transmission beam when transmitting a PUCCH/PUSCH/PRACH/SRS, etc. means applying a spatial transmission parameter/spatial domain transmission filter/spatial transmission filter (spatial Tx parameter / spatial domain Tx filter / spatial Tx filter) for transmission of a corresponding PUCCH/PUSCH/PRACH/SRS.

In addition, in this disclosure, applying a reception beam when receiving a CORESET/PDCCH/PDSCH/CSI-RS, etc. means applying a spatial reception parameter (spatial Rx parameter) for reception of a CORESET/PDCCH/PDSCH/CSI-RS.

Embodiment 1: In a BWP in which a UE's CORESET pool index (e.g., CORESETPoolIndex) is configured (i.e., a BWP in which a plurality of CORESET pools are configure), a method in which a UE updates a CORESET beam when performing a common beam update using a joint DL/UL TCI state and/or a separate DL/UL TCI state (e.g., DL only TCI state or UL only TCI state) of a base station.

Embodiment 1-1: When a common beam update (or indication) is performed in the corresponding (active) BWP (i.e., a BWP in which multiple CORESET pools are configured), a UE (UE-dedicated) does not perform updates of all CORESET beams in a corresponding BWP even though a CORESET is a target channel/RS of common beam update. That is, a UE can override a base station's DCI-based common beam update indication for all CORESETs in a corresponding BWP (i.e., excluding a common beam target channel/RS). Through this operation, a UE can maintain two CORESET pool configuration within a corresponding BWP. Therefore, a UE can smoothly receive DCI from each TRP by referring to a QCL-type D RS (of TCI state) configured/activated/corresponding to each CORESET in each CORESET pool.

The above operation may mean that when a UE receives a common beam update (or indication) for a corresponding BWP, a beam update is not performed only for a CORESET. Therefore, a UE can perform a beam update operation according to a common beam update (or indication) for target channels/RSs other than a CORESET.

The operation of Embodiment 1-1 can also be used for "common TCI state ID update and activation for CA case" operations (e.g., among the above agreements, i) one source RS across CCs with operation determined from a common TCI state ID indicated to provide a QCL Type-D indication and determine a UL TX spatial filter for a set of configured CCs (i.e., operation of common TCI state pool for CCs), and ii) one source RS per CC can be determined from a common TCI state ID indicated to provide a QCL Type-D indication and determine a UL TX spatial filter for a set of configured CCs, a CC-specific source RS is additionally associated with the same QCL-TypeD RS (i.e., operation of TCI state pool per CC)).

That is, in a set of CCs that are a target of the update/activation, if two CORESET pools are configured in a specific CC/BWP, a UE may not perform common TCI state ID update and activation operations for the CA case for all CORESETs in a corresponding CC/BWP. And/or, in the set of the configured CCs, the corresponding CC/BWP may be excluded from a TCI state indication of the common TCI state ID update and activation operations.

Embodiment 1-2: When a common beam update is performed in the corresponding (active) BWP (i.e., a BWP in which multiple CORESET pools are configured), a UE may perform a common beam update only for (first) CORESET(s) for which a CORESET pool index (e.g. CORESETPoolIndex) is set to 0 or for which no CORESET pool index (e.g. CORESETPoolIndex) is provided, and may not perform a beam update for the remaining (second) CORESET(s). Or, conversely, a UE may perform a common beam update on (second) CORESET(s) without performing a beam update on (first) CORESET(s). Alternatively, configuration/switching may be performed by a base station for the above two operations.

Through this operation, when receiving DCI from a primary TRP in the first (or second) CORESET(s) within a corresponding BWP of a UE, a UE can perform one beam operation by performing a common beam update operation only on the CORESET(s) corresponding to the primary TRP.

Likewise, the operation of Embodiment 1-2 can also be utilized in the "update and activate common TCI state ID for CA case" operation. For example, a UE may perform a common beam update only for CORESET(s) within a CC that is predetermined (e.g. CC with lowest/highest cell ID) or configured by a base station among multiple CCs for which a CA is configured.

Meanwhile, in Rel-17 standardization, as described above, standardization was conducted for the case where M, the number of DL TCIs including a DL source RS (as DL beam reference RS) for a common beam operation, and N, the number of UL TCIs including a UL source RS (as UL beam reference RS), are both 1. In standardization after Rel-17, standardization may be carried out for cases where M>1 and/or N>1. In this regard, a base station's beam indication/update indication and a UE's beam update operation are proposed as follows.

Embodiment 2: When M, the number of DL TCIs and/or N, the number of UL TCIs for a common beam operation of a UE, is greater than 1, M and/or N may correspond to the number of TRPs for a base station and/or the number of Rx/Tx beams/panels of the UE. Specifically, M, the number of DL TCIs, may correspond to M TRPs (for DL transmission) for a base station or M Rx beams/panels of a terminal. Additionally, N, the number of UL TCIs, may correspond to M TRPs (for UL reception) for a base station or M Tx beams/panels of a terminal. That is, when there are multiple M/Ns, multiple different TRPs for a base station and M/N common beam references for a terminal to receive/transmit through multiple different beams/panels can be configured/indicated.

As described above, when M>1, each of M source reference signals (or 2M, if qcl_Type2 is configured in addition to qcl_Type1) in M DL TCIs may provide QCL information for at least one of M beam pair links for UE-dedicated reception in a PDSCH and/or on a subset of CORESETs in a CC. Additionally, when N>1, each of N source reference signals of N UL TCIs can provide a reference for determining a UL TX spatial filter for at least one of N beam pair links associated with a dynamic-grant/configured-grant based PUSCH and/or subset of dedicated PUCCH resources within a CC. Additionally, when M>1 and N>1, a joint DL/UL TCI may refer to at least a common source reference RS used to determine both DL QCL information and UL TX spatial filter. Additionally, when M>1 and N>1, M DL TCI and N UL TCI can be configured separately.

Embodiment 2-1: A base station can configure/update a target channel/RS for applying M/N (DL/UL) TCIs of a UE (in common beam operation) through higher layer signaling (e.g. RRC/MAC CE signaling).

Here, a target channel/RS may include at least one (i.e., all or part) of an (M-TRP repeat) PDCCH, a subset of CORESETs (e.g. CORESET(s) with a specific CORESET pool index (CORESETPoolIndex)), an (M-TRP repeat) PDSCH, an AP CSI-RS for BM or CSI, an (M-TRP repeat) PUCCH, a subset of dedicated PUCCH resources (e.g., all or some PUCCH groups), an (M-TRP repeat) PUSCH, or SRS. Through this target channel/RS configuration indication, a base station can perform a beam operation by configuring/indicating multiple (M and/or N) common beam references for multi-TRP/panel. For example, to indicate/update a common beam reference for multi-TRP/panel, a base station may configure only M DL TCIs to a UE, only N UL TCIs to a UE, or M (i.e., M=N) joint TCIs to a UE.

Embodiment 2-2: In the M/N number of TCIs, a first TCI may correspond to a first transmission occasion (TO) group of a PDCCH/PDSCH/CSI-RS/PUCCH/PUSCH/SRS, a first CORESET(s) with a CORESET pool index (e.g. CORESETPoolIndex) value of 0 and/or a first PUCCH group. Additionally, a second TCI may correspond to a second TO group of a PDCCH/PDSCH/CSI-RS/PUCCH/PUSCH/SRS, a second CORESET(s) with a CORESET pool index (e.g., CORESETPoolIndex) value of 1, and/or a second PUCCH group. Even when M/N is 3 or more, the correspondence relationship can be applied/defined in the same ascending order. Through this operation, a base station can clearly configure/indicate a terminal to which M/N TCIs are, respectively, applied to some target channels/RSs of each specific channels/RSs.

Embodiment 2-3: M/N TCI states for configuring/indicating (with plural) M/N common reference RS (related to joint TCI) and/or separate reference RS (related to separate TCI) can be associated/mapped/connected to each codepoint in a TCI state field of DL/UL grant DCI. Additionally, a base station can indicate a UE to apply a common beam for M/N reception/transmission by indicating the corresponding codepoint to the UE through the DCI. Through this operation, unlike Rel-17, a base station can dynamically indicate multiple M/N TCIs and operate multiple (M/N) common beam references for multi-TRP/panel. In the TCI state field, codepoints with one DL/UL TCI (i.e., associated/mapped/connected) and codepoints with multiple DL/UL TCIs (i.e., associated/mapped/connected) may be mixed. Here, when a codepoint with one DL/UL TCI (i.e., associated/mapped/connected) is indicated by a base station, a UE understands/considers that a common beam operation of Rel-17 is being performed and can perform a beam update operation. On the other hand, when a codepoint with multiple DL/UL TCIs (i.e., associated/mapped/connected) is indicated by a base station, based on Embodiment 2-1/2-2 above, a UE understands/considers that multiple TCIs (i.e., M/N TCIs) are applied to a (preconfigured) target channel/RS and can perform a beam update operation.

Additionally, in BWP where two CORESET pools are configured, one TCI update and multiple TCI updates can be dynamically switched through a corresponding field. Here, when one TCI update is indicated, at least one method among several methods related to Embodiment 1 can be used for two CORESET pools.

In addition to the above problems and Embodiment 1 (Embodiment 1-1/1-2) and/or Embodiment 2 (Embodiment 2-1/2-2/2-3), the following embodiments may be considered. If one or multiple CORESET pools are configured in a specific BWP, a UE may update (with the same TCI) all CORESET(s) related to/same as a CORESET pool index (e.g., CORESETPoolIndex) of a CORESET in which DCI for a TCI update is transmitted, and may not perform updates on CORESET(s) for which a different CORESET pool index (e.g., CORESETPoolIndex) has been configured. Additionally, when using a PUCCH resource group when updating a DL/UL reception/transmission beam using a joint DL/UL TCI, the update can be performed only on a PUCCH resource group (i.e. all PUCCH resources within that PUCCH resource group) associated with DCI for a corresponding TCI update (with the same TCI).

Here, a PUCCH resource group associated with DCI for a corresponding TCI update may be, for example, a PUCCH resource group to which a PUCCH resource corresponding to a PUCCH resource indicator (PRI) designated/indicated by corresponding DCI belongs.

Alternatively, a PUCCH resource group associated with DCI for a corresponding TCI update may be a PUCCH resource group to which a PUCCH resource to which a (aperiodic/semi-persistent) CSI report that is triggered/activated/deactivated by corresponding DCI is transmitted belongs. For example, it may be determined for which PUCCH resource group a TCI state will be updated depending on a CORESET pool index (e.g., CORESETPoolIndex) on which DCI scheduling an active MAC-CE (i.e., via PDSCH) for semi persistent (SP)-CSI reporting on a PUCCH is transmitted. For example, in the case of the lowest CORESET pool index, a PUCCH resource group with the lowest index is determined, and in the case of the highest CORESET pool index, a mapping relationship in ascending order in which a PUCCH resource group with the highest index is determined can be considered.

Among the operations of Embodiment 1 (Embodiment 1-1/1-2) and Embodiment 2 (Embodiment 2-1/2-2/2-3), only one may be performed between a base station and a terminal, or a plurality of operations may be performed in combination.

FIG. 8 illustrates a signaling procedure between a network and a terminal for a wireless signal transmission and reception method according to an embodiment of the present disclosure.

FIG. 8 illustrates signaling between a network (e.g., TRP 1, TRP 2) and a UE in a situation of multi-TRPs (multiple TRPs) (i.e., M-TRPs, or multiple cells, hereinafter, all TRPs may be replaced with a cell) that methods proposed in the present disclosure (e.g., any one or a combination of one or more in Embodiment 1, Embodiment 2, and the detailed examples for Embodiments 1 and 2) may be applied. Here, a UE/a network is just an example, and may be applied by being substituted with a variety of devices. FIG. 8 is just for convenience of a description, and does not limit a scope of the present disclosure. In addition, some step(s) illustrated in FIG. 8 may be omitted depending on circumstances and/or configurations.

The signaling method described in FIG. 8 can be extended and applied to signaling between multiple TRPs and multiple UEs. In the following description, a network may be one base station including a plurality of TRPs or may be one cell including a plurality of TRPs. In an example, an ideal/a non-ideal backhaul may be configured between TRP 1 and TRP 2 configuring a network. In addition, the following description is described based on a plurality of TRPs, but it may be equally extended and applied to transmission through a plurality of panels. In addition, in the present disclosure, an operation that a terminal receives a signal from TRP1/TRP2 may be interpreted/described (or may be an operation) as an operation that a terminal receives a signal from a network (through/with TRP1/2) and an operation that a terminal transmits a signal to TRP1/TRP2 may be interpreted/described (or may be an operation) as an operation that a terminal transmits a signal to a network (through/with TRP1/TRP2) or may be conversely interpreted/described.

In reference to FIG. 8, it is assumed that a UE receives configuration/DCI from a representative TRP (e.g., TRP 1) in an M-TRP situation (or cell, hereinafter all TRPs can be replaced by a cell/panel, or M-TRP can be assumed even when a plurality of CORESETs are configured from one TRP). This is only for convenience of description, and the method described below may be extended and applied even when a UE receives configuration/DCI from at least one TRP. As an example, the representative TRP may be a TRP for transmitting/transporting a system information block (SIB) / paging / random access (RA) related signal to a UE.

A UE may receive configuration information through/using TRP 1 (and/or TRP 2) from a network (S801).

The configuration information may include information related to network configuration (e.g., TRP configuration) / information related to M-TRP-based transmission/reception (e.g., resource allocation, etc.). In this case, the configuration information may be transmitted through higher layer signaling (e.g., RRC signaling, MAC-CE, etc.).

The configuration information may include configuration information related to the beam indication/update procedure described in the above-mentioned proposed methods (e.g., any one or a combination of one or more in Embodiment 1, Embodiment 2, and the detailed examples for Embodiments 1 and 2) .

For example, the configuration information may include information for configuring a joint TCI and/or a separate DL/UL TCI. For example, the configuration information may include a list of TCI states that provides a reference signal for QCL for a DMRS/downlink signal (e.g., CSI-RS) of a downlink channel (e.g., PDSCH, PDCCH), and/or provides a reference for determining an uplink transmission spatial filter of a DMRS/uplink signal (e.g., SRS) of an uplink channel (e.g., PUSCH, PUCCH). Unless downlink/uplink signals are separately described in the present disclosure, a downlink channel may be a concept that includes all downlink channels/signals, and an uplink channel may be a concept that includes all uplink channels/signals.

As another example, the configuration information may include a CORESET configuration. For example, a configuration for each CORESET may include a CORESET pool index for a CORESET pool to which the CORESET belongs.

A UE may receive downlink control information (DCI) from a network through/using TRP 1 (and/or TRP 2) (S802).

Here, DCI may be transmitted through a downlink control channel (e.g., PDCCH), and a UE may monitor/receive a downlink control channel (e.g., PDCCH) in one or more CORESETs configured in its BWP and detect/decode DCI.

Here, DCI (e.g., DCI format 1_1/1_2) may schedule transmission of a downlink channel (e.g., PDSCH) or an uplink channel (e.g., PUSCH) and may trigger transmission of an uplink signal (e.g., SRS). Alternatively, DCI may not include uplink assignment or downlink assignment.

Additionally, DCI may include a transmission configuration indication (TCI) field, and a TCI state for a downlink/uplink channel/signal may be indicated by a codepoint in the TCI field. Here, as described above, a TCI codepoint may be mapped/corresponding to one TCI state, and/or may be mapped/corresponding to multiple TCI states. In other words, since one TCI state or multiple TCI states can be indicated for each TCI codepoint, depending on a codepoint value of a TCI field in DCI, it can be determined whether one TCI state or two TCI states in the list of TCI states are indicated.

A UE may perform uplink transmission (i.e., uplink channel (e.g., PUCCH, PUSCH) and/or signal (e.g., SRS)) to a network or receive downlink transmission (i.e., downlink channel (e.g., PDSCH, PDCCH) and/or signal (e.g., CSI-RS)) from a network (S803).

Here, a UE can perform uplink transmission or receive downlink transmission based on the above-described proposed methods (e.g., any one or a combination of one or more in Embodiment 1, Embodiment 2, and the detailed examples for Embodiments 1 and 2).

For example, based on one TCI state in the list of TCI states being indicated by the DCI, the indicated single TCI state can be applied to both uplink transmission and downlink transmission associated with a CORESET pool index of a CORESET in which the DCI is transmitted. That is, when a UE performs uplink transmission, based on a TCI state indicated by DCI, an RS in the corresponding TCI state can be used as a reference to determine an uplink transmission spatial filter for uplink transmission. In addition, when a UE receives downlink transmission, based on a TCI state indicated by DCI, downlink transmission can be received by assuming a QCL relationship between an RS and downlink transmission in the corresponding TCI state.

For example, when uplink transmission is a PUCCH, the indicated TCI state may be applied to all PUCCH resources in a PUCCH resource group associated with a CORESET pool index of a CORESET in which the DCI was transmitted. Here, the associated PUCCH resource group may mean a PUCCH resource group to which a PUCCH resource indicated by a PUCCH resource indicator (PRI) field in the DCI belongs. Alternatively, the associated PUCCH resource group may mean a PUCCH resource group to which a PUCCH resource to which a CSI report triggered by the DCI is transmitted belongs.

As another example, based on the DCI indicating two TCI states in the list of TCI states, uplink or downlink transmission to which the two TCI states apply may be configured by the network (e.g., through higher layer signaling).

Alternatively, based on the DCI indicating two TCI states in the list of TCI states, among the two TCI states, a first TCI state may be applied to one or more CORESETs having a first CORESET pool index, and a second TCI state may be applied to one or more CORESETs having a second CORESET pool index. Here, applying to a CORESET may mean applying to a PDCCH (i.e., DMRS of PDCCH) monitored/received in a corresponding CORESET.

Alternatively, based on the DCI indicating two TCI states in the list of TCI states, among the two TCI states, a first TCI state is applied to a first TO (or first TO group) of uplink or downlink transmission, and a second TCI state may be applied to a second TO (or second TO group) of the uplink or downlink transmission. That is, a TCI state can be applied according to a predetermined rule (e.g., as an index of a TO (or TO group) increases, it is mapped in ascending/descending order of a TCI state index) for each TO (or TO group) or according to configuration by the network.

Meanwhile, although not shown in FIG. 8, a UE may receive first DCI from a first TRP and second DCI from a second TRP. In this case, first DCI and second DCI may each include a TCI field, and each TCI field indicates one TCI state, so a total of two TCI states may be indicated to a UE.

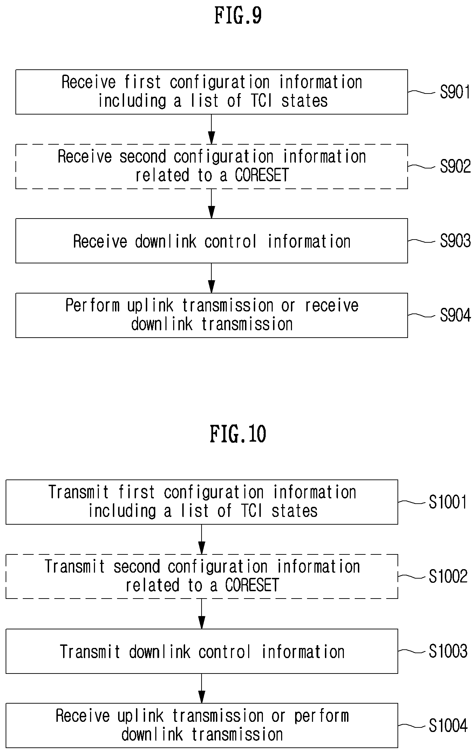

FIG. 9 is a diagram illustrating an operation of a terminal for a method of transmitting and receiving a wireless signal according to an embodiment of the present disclosure.

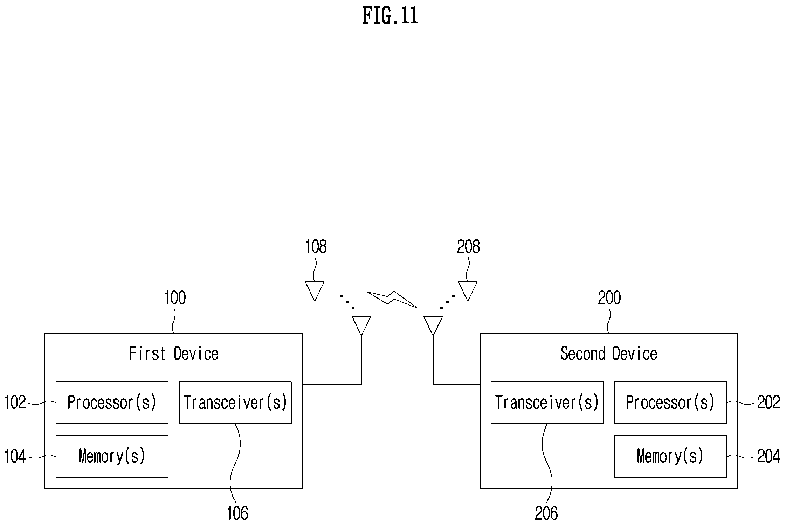

In FIG. 9, an operation of a UE based on the previously proposed methods (e.g., any one or a combination of one or more in Embodiment 1, Embodiment 2, and the detailed examples for Embodiments 1 and 2) is exemplified. The example of FIG. 9 is for convenience of description, and does not limit the scope of the present disclosure. Some step(s) illustrated in FIG. 9 may be omitted depending on circumstances and/or configurations. In addition, a UE in FIG. 9 is only one example, and may be implemented as the device illustrated in FIG. 11 below. For example, the processor 102/202 of FIG. 11 may control to transmit/receive a channel/signal/data/information, etc. using the transceiver 106/206, and may control to store a transmitted or received channel/signal/data/information, etc. may be controlled in the memory 104/204.

In addition, the operations of FIG. 9 may be processed by one or more processors 102, 202 of FIG. 11, and the operations of FIG. 9 may be stored in a memory (e.g., one or more memories 104, 204 of FIG. 11) in the form of instructions/programs (e.g., instruction, executable code) for driving at least one processor (e.g., 102 and 202) of FIG. 11.

Referring to FIG. 9, a UE receives first configuration information including a list of TCI states from a base station (S901).

Here, a list of TCI states may correspond to a list of TCI states for a joint (or unified) TCI configuration commonly applicable to uplink/downlink transmission, or correspond to a list of TCI states for separate TCI configurations that are individually applicable to uplink or downlink transmission. For example, the first configuration information may include a list of TCI states that provides a reference signal for QCL for a DMRS/downlink signal (e.g., CSI-RS) of a downlink channel (e.g., PDSCH, PDCCH), and/or provides a reference for determining an uplink transmission spatial filter of a DMRS/uplink signal (e.g., SRS) of an uplink channel (e.g., PUSCH, PUCCH).

For example, the first configuration information may be transmitted by being included in configuration information for a PDSCH (e.g., PDSCH-Config) or may be transmitted by being included in configuration information for a BWP (e.g., BWP).

A UE may receive second configuration information related to a CORESET from a base station (S902).

Here, the second configuration information related to a CORESET may be transmitted as individual configuration information for each CORESET, and configuration information for each CORESET may include a CORESET pool index for a CORESET pool to which the corresponding CORESET belongs.

For example, the second configuration information may be transmitted by being included in configuration information for a PDCCH (e.g., PDCCH-Config) or may be transmitted by being included in configuration information for a BWP (e.g., BWP).

A UE receives downlink control information (DCI) from a base station (S903).

Here, DCI may be transmitted through a downlink control channel (e.g., PDCCH), and a UE may monitor/receive a downlink control channel (e.g., PDCCH) in one or more CORESETs configured in its BWP and detect/decode DCI.

Here, DCI (e.g., DCI format 1_1/1_2) may schedule transmission of a downlink channel (e.g., PDSCH) or an uplink channel (e.g., PUSCH) and may trigger transmission of an uplink signal (e.g., SRS). Alternatively, DCI may not include uplink assignment or downlink assignment.

Additionally, DCI may include a transmission configuration indication (TCI) field, and a TCI state for a downlink/uplink channel/signal may be indicated by a codepoint in the TCI field. Here, as described above, a TCI codepoint may be mapped/corresponding to one TCI state, and/or may be mapped/corresponding to multiple TCI states. In other words, since one TCI state or multiple TCI states can be indicated for each TCI codepoint, depending on a codepoint value of a TCI field in DCI, it can be determined whether one TCI state or two TCI states in the list of TCI states are indicated.

A UE may perform uplink transmission (i.e., uplink channel (e.g., PUCCH, PUSCH) and/or signal (e.g., SRS)) to a base station or receive downlink transmission (i.e., downlink channel (e.g., PDSCH, PDCCH) and/or signal (e.g., CSI-RS)) from a base station (S904).

Here, a UE can perform uplink transmission or receive downlink transmission based on the above-described proposed methods (e.g., any one or a combination of one or more in Embodiment 1, Embodiment 2, and the detailed examples for Embodiments 1 and 2).

For example, based on one TCI state in the list of TCI states being indicated by the DCI, the indicated single TCI state can be applied to both uplink transmission and downlink transmission associated with a CORESET pool index of a CORESET in which the DCI is transmitted. That is, when a UE performs uplink transmission, based on a TCI state indicated by DCI, an RS in the corresponding TCI state can be used as a reference to determine an uplink transmission spatial filter for uplink transmission. In addition, when a UE receives downlink transmission, based on a TCI state indicated by DCI, downlink transmission can be received by assuming a QCL relationship between an RS and downlink transmission in the corresponding TCI state.

For example, when uplink transmission is a PUCCH, the indicated TCI state may be applied to all PUCCH resources in a PUCCH resource group associated with a CORESET pool index of a CORESET in which the DCI was transmitted. Here, the associated PUCCH resource group may mean a PUCCH resource group to which a PUCCH resource indicated by a PUCCH resource indicator (PRI) field in the DCI belongs. Alternatively, the associated PUCCH resource group may mean a PUCCH resource group to which a PUCCH resource to which a CSI report triggered by the DCI is transmitted belongs.

As another example, based on the DCI indicating two TCI states in the list of TCI states, uplink or downlink transmission to which the two TCI states apply may be configured by the network (e.g., through higher layer signaling).

Alternatively, based on the DCI indicating two TCI states in the list of TCI states, among the two TCI states, a first TCI state may be applied to one or more CORESETs having a first CORESET pool index, and a second TCI state may be applied to one or more CORESETs having a second CORESET pool index. Here, applying to a CORESET may mean applying to a PDCCH (i.e., DMRS of PDCCH) monitored/received in a corresponding CORESET.

Alternatively, based on the DCI indicating two TCI states in the list of TCI states, among the two TCI states, a first TCI state is applied to a first TO (or first TO group) of uplink or downlink transmission, and a second TCI state may be applied to a second TO (or second TO group) of the uplink or downlink transmission. That is, a TCI state can be applied according to a predetermined rule (e.g., as an index of a TO (or TO group) increases, it is mapped in ascending/descending order of a TCI state index) for each TO (or TO group) or according to configuration by the network.

Meanwhile, although not shown in FIG. 9, a UE may receive first DCI from a first TRP and second DCI from a second TRP. In this case, first DCI and second DCI may each include a TCI field, and each TCI field indicates one TCI state, so a total of two TCI states may be indicated to a UE.

FIG. 10 is a diagram illustrating an operation of a base station for a method of transmitting and receiving a wireless signal according to an embodiment of the present disclosure.

In FIG. 10, an operation of a base station based on the previously proposed methods (e.g., any one or a combination of one or more in Embodiment 1, Embodiment 2, and the detailed examples for Embodiments 1 and 2) is exemplified. The example of FIG. 10 is for convenience of description, and does not limit the scope of the present disclosure. Some step(s) illustrated in FIG. 10 may be omitted depending on circumstances and/or configurations. In addition, a base station in FIG. 10 is only one example, and may be implemented as the device illustrated in FIG. 11 below. For example, the processor 102/202 of FIG. 11 may control to transmit/receive a channel/signal/data/information, etc. using the transceiver 106/206, and may control to store a transmitted or received channel/signal/data/information, etc. may be controlled in the memory 104/204.

In addition, the operations of FIG. 10 may be processed by one or more processors 102, 202 of FIG. 11, and the operations of FIG. 10 may be stored in a memory (e.g., one or more memories 104, 204 of FIG. 11) in the form of instructions/programs (e.g., instruction, executable code) for driving at least one processor (e.g., 102 and 202) of FIG. 11.

Referring to FIG. 10, a base station transmits first configuration information including a list of TCI states to a UE (S1001).

Here, a list of TCI states may correspond to a list of TCI states for a joint (or unified) TCI configuration commonly applicable to uplink/downlink transmission, or correspond to a list of TCI states for separate TCI configurations that are individually applicable to uplink or downlink transmission. For example, the first configuration information may include a list of TCI states that provides a reference signal for QCL for a DMRS/downlink signal (e.g., CSI-RS) of a downlink channel (e.g., PDSCH, PDCCH), and/or provides a reference for determining an uplink transmission spatial filter of a DMRS/uplink signal (e.g., SRS) of an uplink channel (e.g., PUSCH, PUCCH).

For example, the first configuration information may be transmitted by being included in configuration information for a PDSCH (e.g., PDSCH-Config) or may be transmitted by being included in configuration information for a BWP (e.g., BWP).

A base station may transmit second configuration information related to a CORESET to a UE (S1002).

Here, the second configuration information related to a CORESET may be transmitted as individual configuration information for each CORESET, and configuration information for each CORESET may include a CORESET pool index for a CORESET pool to which the corresponding CORESET belongs.

For example, the second configuration information may be transmitted by being included in configuration information for a PDCCH (e.g., PDCCH-Config) or may be transmitted by being included in configuration information for a BWP (e.g., BWP).

A base station transmits downlink control information (DCI) to a UE (S1003).

Here, DCI may be transmitted through a downlink control channel (e.g., PDCCH), and a UE may monitor/receive a downlink control channel (e.g., PDCCH) in one or more CORESETs configured in its BWP and detect/decode DCI.

Here, DCI (e.g., DCI format 1_1/1_2) may schedule transmission of a downlink channel (e.g., PDSCH) or an uplink channel (e.g., PUSCH) and may trigger transmission of an uplink signal (e.g., SRS). Alternatively, DCI may not include uplink assignment or downlink assignment.

Additionally, DCI may include a transmission configuration indication (TCI) field, and a TCI state for a downlink/uplink channel/signal may be indicated by a codepoint in the TCI field. Here, as described above, a TCI codepoint may be mapped/corresponding to one TCI state, and/or may be mapped/corresponding to multiple TCI states. In other words, since one TCI state or multiple TCI states can be indicated for each TCI codepoint, depending on a codepoint value of a TCI field in DCI, it can be determined whether one TCI state or two TCI states in the list of TCI states are indicated.

A base station may receive uplink transmission (i.e., uplink channel (e.g., PUCCH, PUSCH) and/or signal (e.g., SRS)) from a UE or transmit downlink transmission (i.e., downlink channel (e.g., PDSCH, PDCCH) and/or signal (e.g., CSI-RS)) to a UE (S1004).

Here, a base station can receive uplink transmission or perform downlink transmission based on the above-described proposed methods (e.g., any one or a combination of one or more in Embodiment 1, Embodiment 2, and the detailed examples for Embodiments 1 and 2).

For example, based on one TCI state in the list of TCI states being indicated by the DCI, the indicated single TCI state can be applied to both uplink transmission and downlink transmission associated with a CORESET pool index of a CORESET in which the DCI is transmitted. That is, when receiving uplink transmission from a UE, based on a TCI state indicated by DCI, an RS in the corresponding TCI state can be used as a reference to determine an uplink transmission spatial filter for uplink transmission. In addition, when performing downlink transmission to a UE, based on a TCI state indicated by DCI, downlink transmission can be received by assuming a QCL relationship between an RS and downlink transmission in the corresponding TCI state.

For example, when uplink transmission is a PUCCH, the indicated TCI state may be applied to all PUCCH resources in a PUCCH resource group associated with a CORESET pool index of a CORESET in which the DCI was transmitted. Here, the associated PUCCH resource group may mean a PUCCH resource group to which a PUCCH resource indicated by a PUCCH resource indicator (PRI) field in the DCI belongs. Alternatively, the associated PUCCH resource group may mean a PUCCH resource group to which a PUCCH resource to which a CSI report triggered by the DCI is transmitted belongs.

As another example, based on the DCI indicating two TCI states in the list of TCI states, uplink or downlink transmission to which the two TCI states apply may be configured by the network (e.g., through higher layer signaling).

Alternatively, based on the DCI indicating two TCI states in the list of TCI states, among the two TCI states, a first TCI state may be applied to one or more CORESETs having a first CORESET pool index, and a second TCI state may be applied to one or more CORESETs having a second CORESET pool index. Here, applying to a CORESET may mean applying to a PDCCH (i.e., DMRS of PDCCH) monitored/received in a corresponding CORESET.

Alternatively, based on the DCI indicating two TCI states in the list of TCI states, among the two TCI states, a first TCI state is applied to a first TO (or first TO group) of uplink or downlink transmission, and a second TCI state may be applied to a second TO (or second TO group) of the uplink or downlink transmission. That is, a TCI state can be applied according to a predetermined rule (e.g., as an index of a TO (or TO group) increases, it is mapped in ascending/descending order of a TCI state index) for each TO (or TO group) or according to configuration by the network.

Meanwhile, although not shown in FIG. 10, first DCI may be transmitted to a UE from a first TRP, and second DCI may be transmitted from a second TRP. In this case, first DCI and second DCI may each include a TCI field, and each TCI field indicates one TCI state, so a total of two TCI states may be indicated to a UE.

General Device to which the Present Disclosure may be applied

FIG. 11 is a diagram which illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of performed by a terminal in a wireless communication system, the method comprising:

   receiving, from a base station, first configuration information including a list of transmission configuration indication (TCI) states, wherein the list of TCI states provides a reference for determining a reference signal for quasi co-location (QCL) for a downlink channel and/or an uplink transmission spatial filter for an uplink channel;
   receiving, from the base station, second configuration information related to a control resource set (CORESET), wherein a plurality of CORESETs having different CORESET pool indexes are configured by the second configuration information; and
   receiving, from the base station, downlink control information (DCI),
   wherein based on one TCI state in the list of TCI states being indicated by the DCI, the indicated one TCI state is applied to uplink transmission and downlink transmission related to a CORESET pool index of a CORESET in which the DCI is transmitted.

2. The method of claim 1, wherein the indicated TCI state is applied to all PUCCH resources in a PUCCH (physical uplink control channel) resource group related to the CORESET pool index of the CORESET in which the DCI is transmitted.

3. The method of claim 2, wherein the PUCCH resource group is a PUCCH resource group to which a PUCCH resource indicated by a PUCCH resource indicator (PRI: PUCCH resource indicator) field in the DCI belongs.

4. The method of claim 2, wherein a PUCCH resource group to which a PUCCH resource in which a channel state information (CSI) report triggered by the DCI is transmitted belongs.

5. The method of claim 1, wherein the uplink transmission and the downlink transmission related to the CORESET pool index of the CORESET in which the DCI is transmitted includes at least one of PDSCH (physical downlink shared channel), PDCCH (physical downlink control channel), a CORESET, a channel state information-reference signal (CSI-RS), a PUCCH, a PUSCH (physical uplink shared channel), a sounding reference signal (SRS) .

6. The method of claim 1, wherein based on two TCI states in the list of TCI states being indicated by the DCI, uplink or downlink transmission to which the two TCI states apply is configured by the base station.

7. The method of claim 1, wherein based on two TCI states in the list of TCI states being indicated by the DCI, among the two TCI states, a first TCI state is applied to one or more CORESETs having a first CORESET pool index, and a second TCI state is applied to one or more CORESETs having a second CORESET pool index.

8. The method of claim 1, wherein based on two TCI states in the list of TCI states being indicated by the DCI, among the two TCI states, a first TCI state applies to a first transmission occasion (TO) group of uplink or downlink transmission, and a second TCI state applies to a second TO group of the uplink or downlink transmission.

9. The method of claim 1, wherein depending on a codepoint value of a TCI field in the DCI, whether one TCI state or two TCI states in the list of TCI states are indicated is determined.

10. A terminal operating in a wireless communication system, the terminal comprising:

at least one transceiver for transmitting and receiving a wireless signal; and
at least one processor for controlling the at least one transceiver,
wherein the at least one processor configured to:

> receive, from a base station, first configuration information including a list of transmission configuration indication (TCI) states, wherein the list of TCI states provides a reference for determining a reference signal for quasi co-location (QCL) for a downlink channel and/or an uplink transmission spatial filter for an uplink channel;
>
> receive, from the base station, second configuration information related to a control resource set (CORESET), wherein a plurality of CORESETs having different CORESET pool indexes are configured by the second configuration information; and
>
> receive, from the base station, downlink control information (DCI),
>
> wherein based on one TCI state in the list of TCI states being indicated by the DCI, the indicated one TCI state is applied to uplink transmission and downlink transmission related to a CORESET pool index of a CORESET in which the DCI is transmitted.

11. At least one non-transitory computer-readable medium storing at least one instruction, wherein the at least one instruction executable by at least one processor controls a device to:

> receive, from a base station, first configuration information including a list of transmission configuration indication (TCI) states, wherein the list of TCI states provides a reference for determining a reference signal for quasi co-location (QCL) for a downlink channel and/or an uplink transmission spatial filter for an uplink channel;
>
> receive, from the base station, second configuration information related to a control resource set (CORESET), wherein a plurality of CORESETs having different CORESET pool indexes are configured by the second configuration information; and
>
> receive, from the base station, downlink control information (DCI),
>
> wherein based on one TCI state in the list of TCI states being indicated by the DCI, the indicated one TCI state is applied to uplink transmission and downlink transmission related to a CORESET pool index of a CORESET in which the DCI is transmitted.

12. A processing apparatus configured to control a terminal in a wireless communication system, the processing apparatus comprising:

> at least one processor; and
> at least one computer memory operably connected to the at least one processor and storing instructions that, based on being executed by the at least one processor, perform operations comprising:
>
>> receiving, from a base station, first configuration information including a list of transmission configuration indication (TCI) states, wherein the list of TCI states provides a reference for determining a reference signal for quasi co-location (QCL) for a downlink channel and/or an uplink transmission spatial filter for an uplink channel;
>>
>> receiving, from the base station, second configuration information related to a control resource set (CORESET), wherein a plurality of CORESETs having different CORESET pool indexes are configured by the second configuration information; and
>>
>> receiving, from the base station, downlink control information (DCI),
>>
>> wherein based on one TCI state in the list of TCI states being indicated by the DCI, the indicated one TCI state is applied to uplink transmission and downlink transmission related to a CORESET pool index of a CORESET in which the DCI is transmitted.

13. A method performed by a base station in a wireless communication system, the method comprising:

> transmitting, to a terminal, first configuration information including a list of transmission configuration indication (TCI) states, wherein the list of TCI states provides a reference for determining a reference signal for quasi co-location (QCL) for a downlink channel and/or an uplink transmission spatial filter for an uplink channel;
>
> transmitting, to the terminal, second configuration information related to a control resource set (CORESET), wherein a plurality of CORESETs having different CORESET pool indexes are configured by the second configuration information; and
>
> transmitting, to the terminal, downlink control information (DCI),

wherein based on one TCI state in the list of TCI states being indicated by the DCI, the indicated one TCI state is applied to uplink transmission and downlink transmission related to a CORESET pool index of a CORESET in which the DCI is transmitted.

14. A base station operating in a wireless communication system, the base station comprising:

at least one transceiver for transmitting and receiving a wireless signal; and
at least one processor for controlling the at least one transceiver,
wherein the at least one processor configured to:

transmit, to a terminal, first configuration information including a list of transmission configuration indication (TCI) states, wherein the list of TCI states provides a reference for determining a reference signal for quasi co-location (QCL) for a downlink channel and/or an uplink transmission spatial filter for an uplink channel;
transmit, to the terminal, second configuration information related to a control resource set (CORESET), wherein a plurality of CORESETs having different CORESET pool indexes are configured by the second configuration information; and
transmit, to the terminal, downlink control information (DCI),
wherein based on one TCI state in the list of TCI states being indicated by the DCI, the indicated one TCI state is applied to uplink transmission and downlink transmission related to a CORESET pool index of a CORESET in which the DCI is transmitted.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

# FIG.3

## FIG.4

# FIG.5

FIG.6

# FIG.7

TRP 1             TRP 2

Layer group #1     Layer group #2
for CW #1           for CW #1

UE1

(a)

TRP 1             TRP 2

Layer group #1     Layer group #2
for CW #1           for CW #2

UE1

(b)

# FIG.8

Terminal                 Base station

Configuration information     S801

Downlink control information     S802

Uplink transmission or downlink transmission     S803

FIG.9

```
┌──────────────────────────────────────────┐
│  Receive first configuration information  │── S901
│       including a list of TCI states      │
└──────────────────────────────────────────┘
                      │
                      ▼
┌ ─ ─ ─ ─ ─ ─ ─ ─ ─ ─ ─ ─ ─ ─ ─ ─ ─ ─ ─ ─ ─┐
│  Receive second configuration information  │── S902
│           related to a CORESET             │
└ ─ ─ ─ ─ ─ ─ ─ ─ ─ ─ ─ ─ ─ ─ ─ ─ ─ ─ ─ ─ ─┘
                      │
                      ▼
┌──────────────────────────────────────────┐
│       Receive downlink control information │── S903
└──────────────────────────────────────────┘
                      │
                      ▼
┌──────────────────────────────────────────┐
│    Perform uplink transmission or receive  │── S904
│            downlink transmission           │
└──────────────────────────────────────────┘
```

FIG.10

```
┌──────────────────────────────────────────┐
│  Transmit first configuration information  │── S1001
│       including a list of TCI states      │
└──────────────────────────────────────────┘
                      │
                      ▼
┌ ─ ─ ─ ─ ─ ─ ─ ─ ─ ─ ─ ─ ─ ─ ─ ─ ─ ─ ─ ─ ─┐
│  Transmit second configuration information │── S1002
│           related to a CORESET             │
└ ─ ─ ─ ─ ─ ─ ─ ─ ─ ─ ─ ─ ─ ─ ─ ─ ─ ─ ─ ─ ─┘
                      │
                      ▼
┌──────────────────────────────────────────┐
│      Transmit downlink control information │── S1003
└──────────────────────────────────────────┘
                      │
                      ▼
┌──────────────────────────────────────────┐
│   Receive uplink transmission or perform   │── S1004
│            downlink transmission           │
└──────────────────────────────────────────┘
```

# FIG.11

## INTERNATIONAL SEARCH REPORT

| International application No. |
| --- |
| **PCT/KR2022/020828** |

**A.    CLASSIFICATION OF SUBJECT MATTER**

**H04B 7/06**(2006.01)i; **H04B 7/08**(2006.01)i; **H04B 7/0408**(2017.01)i; **H04B 17/373**(2015.01)i; **H04L 5/00**(2006.01)i

According to International Patent Classification (IPC) or to both national classification and IPC

**B.    FIELDS SEARCHED**

Minimum documentation searched (classification system followed by classification symbols)

H04B 7/06(2006.01); H04L 5/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전송 설정 지시 상태(transmission configuration indication state), 리스트(list), 제어 자원 세트(control resource set), 하향링크 제어 정보(downlink control information), CORESET 풀 인덱스(CORESET pool index)

**C.    DOCUMENTS CONSIDERED TO BE RELEVANT**

| Category* | Citation of document, with indication, where appropriate, of the relevant passages | Relevant to claim No. |
| --- | --- | --- |
| X<br>Y | WO 2021-253055 A2 (FUTUREWEI TECHNOLOGIES, INC.) 16 December 2021 (2021-12-16)<br>    See paragraphs [0070], [0077], [0079], [0087]-[0088] and [0117]. | 1-7,9-14<br><br>8 |
| Y | WO 2021-231117 A1 (OFINNO, LLC) 18 November 2021 (2021-11-18)<br>    See paragraphs [0300], [0302], [0432], [0434] and [0437]; and figure 25. | 8 |
| A | WO 2021-205409 A1 (TELEFONAKTIEBOLAGET LM ERICSSON (PUBL)) 14 October 2021 (2021-10-14)<br>    See paragraphs [0122]-[0178]; and figures 16-21. | 1-14 |
| A | WO 2021-212456 A1 (QUALCOMM INCORPORATED) 28 October 2021 (2021-10-28)<br>    See paragraphs [0053]-[0095]; and figures 4-13. | 1-14 |

☑ Further documents are listed in the continuation of Box C.     ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 March 2023** | **29 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/020828** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2020-0296704 A1 (HUAWEI TECHNOLOGIES CO., LTD.) 17 September 2020 (2020-09-17)<br>See paragraphs [0114]-[0179]; and figures 4-10. | 1-14 |

Form PCT/ISA/210 (second sheet) (July 2022)

**INTERNATIONAL SEARCH REPORT**
Information on patent family members

International application No.

**PCT/KR2022/020828**

| Patent document cited in search report | | | Publication date (day/month/year) | Patent family member(s) | | | Publication date (day/month/year) |
|---|---|---|---|---|---|---|---|
| WO | 2021-253055 | A2 | 16 December 2021 | WO | 2021-253055 | A3 | 12 May 2022 |
| | | | | WO | 2021-253055 | A9 | 27 January 2022 |
| WO | 2021-231117 | A1 | 18 November 2021 | | None | | |
| WO | 2021-205409 | A1 | 14 October 2021 | AU | 2021-251496 | A1 | 14 October 2021 |
| | | | | EP | 4133667 | A1 | 15 February 2023 |
| | | | | IL | 297141 | A | 01 December 2022 |
| | | | | KR | 10-2022-0158071 | A | 29 November 2022 |
| WO | 2021-212456 | A1 | 28 October 2021 | CN | 115428556 | A | 02 December 2022 |
| US | 2020-0296704 | A1 | 17 September 2020 | BR | 112021000102 | A2 | 30 March 2021 |
| | | | | CN | 112385160 | A | 19 February 2021 |
| | | | | CN | 112385160 | B | 22 April 2022 |
| | | | | EP | 3804188 | A1 | 14 April 2021 |
| | | | | EP | 3804188 | A4 | 18 August 2021 |
| | | | | US | 10701679 | B2 | 30 June 2020 |
| | | | | US | 11026224 | B2 | 01 June 2021 |
| | | | | US | 2020-0015200 | A1 | 09 January 2020 |
| | | | | WO | 2020-007293 | A1 | 09 January 2020 |

Form PCT/ISA/210 (patent family annex) (July 2022)